# EUROPEAN PATENT SPECIFICATION

(11) **EP 3 812 630 B1**
(45) Date of publication and mention of the grant of the patent: **12.04.2023**
(21) Application number: 20191140.1
(22) Date of filing: 14.08.2020
(51) Int. Cl.: F16K 11/044, E03C 1/00, F16K 31/44, F16K 31/528

(54) **WATER DEVIDING VALVE AND WATER DIVIDING FAUCET**
WASSERTRENNVENTIL UND WASSERTRENNHAHN
SOUPAPE DE DIVISION D'EAU ET ROBINET DE DIVISION D'EAU

(30) Priority: 25.10.2019 CN 201911023706
(43) Date of publication of application: 28.04.2021
(73) Proprietor: Fujian Xihe Sanitary Ware Technology Co., Ltd., QuanZhou, Fujian 362304 (CN)
(72) Inventor: LIN, Xiaofa, QuanZhou, Fujian 362304 (CN); LIN, Xiaoshan, QuanZhou, Fujian 362304 (CN); ZHENG, Jun, QuanZhou, Fujian 362304 (CN); JI, Hejun, QuanZhou, Fujian 362304 (CN); DENG, Xiaoqing, QuanZhou, Fujian 362304 (CN); LIU, Qiqiao, QuanZhou, Fujian 362304 (CN)
(74) Representative: Hamel, Armin

(56) References cited:
- DE-A1-102012 001 215
- FR-A- 1 202 666
- GB-A- 1 552 996
- JP-U- S61 202 768

## Description

### FIELD OF THE DISCLOSURE

The present disclosure relates to a field of bathroom fixtures, in particular relates to a water dividing valve and a water dividing faucet.

### BACKGROUND OF THE DISCLOSURE

At present, in order to reduce a number of faucets in many occasions, water dividing faucets are used, by way of example, faucets for washing machines, faucets for bathroom showers, etc. Only one faucet can have two water passages, which is convenient to use, and a cost is reduced.

The water dividing valve used in a general water dividing faucet comprises a valve rod, a valve casing, a base, a movable ceramic piece, and a fixed ceramic piece. The fixed ceramic piece is disposed on a water outlet end of the valve casing. The movable piece is directly and fixedly connected to the valve rod, the valve rod rotates to drive the movable ceramic piece rotate to enable water to flow out from different water passages.

However, as the valve rod is directly connected to the movable ceramic piece, an impact between the valve rod and ceramic pieces may damage the ceramic pieces due to external water pressure and external collision force during use, which affects a service life. In addition, a water outlet space of between the movable ceramic piece and the valve rod is limited, and a water flow rate will also be limited. In places where large water flow rate is required, an affect is particularly obvious, such as hotels, etc. Further, a valve shaft comprising the ceramic pieces is complicated and costly, and the installation is cumbersome.

FR 1 202 666 A relates to a device for reversing a water passage by helical ramp, which is suitable for sanitary devices known as bath shower inverters. A reciprocating movement along an axis is produced by a rod sliding along a helical ramp, which transmits the movement to a valve-holder piston equipped with two rubber valves.

JP S61 202768 U discloses a branch plug for selectively opening and closing each of a main passage and a branch passage through a valve structure which communicates with a main passage communicating a fluid inlet and an outlet of a casing with each other and which slides reciprocally through a guide hole of a casing.

### BRIEF SUMMARY OF THE DISCLOSURE

The present disclosure provides a water dividing valve and a water dividing faucet to solve deficiencies of the existing techniques, the water dividing valve comprises few parts, simple structure, long life, and is easy to be disassembled and assembled.

A technical solution of the present disclosure is as follows.

A water dividing valve comprises a water dividing body and an operation member. The water dividing body comprises a water inlet cavity. The water dividing valve further comprises a movable rod and a transmission member. The movable rod is disposed in the water inlet cavity, and the movable rod comprises a plug and a water passage. The water passage is communicated with the water inlet cavity. The operation member surrounds an outer side of the water dividing body and is configured to be driven to rotate. The transmission member is disposed between the operation member and the movable rod to convert a circumferential movement of the operation member to a circumferential movement and an axial movement of the movable rod or to convert a circumferential movement of the operation member to an axial movement of the movable rod to enable the plug to close or open the water inlet cavity. An outer periphery of the movable rod comprises at least one sliding rail, the transmission member comprises at least one ball, and each of the at least one ball is disposed in an inner wall of the operation member and slidably cooperates to a corresponding one of the at least one slide rail.

In a preferred embodiment, the water dividing body comprises one or more guiding holes, and the at least one ball is disposed in the one or more guiding holes.

In a preferred embodiment, the water dividing valve comprises two balls of the at least one ball and two slide rails of the at least one slide rail, and the two slide rails are disposed along a circumferential direction of the movable rod.

In a preferred embodiment, the at least one sliding rail extends in an axial direction helically or radially, and a shape of the at least one sliding rail is a straight line, an arc line, or a curve line.

In a preferred embodiment, a first end of the movable rod comprises a rod body, and a second end of the movable rod comprises the water passage. A first end of the rod body is disposed in the water inlet cavity and comprises the plug. The water passage comprises a water inlet, and the water inlet is connected to the water inlet cavity.

In a preferred embodiment, the rod body comprises a convex strip, an inner wall of the water inlet cavity comprises a guiding groove, and the convex strip is disposed in the guiding groove.

In a preferred embodiment, the water inlet cavity comprises a diameter variation portion, and the movable rod comprises a step portion correspondingly.

In a preferred embodiment, the water dividing valve further comprising a joint, the joint is fixedly disposed between the operation member and the water dividing body, and the joint is connected to the water passage.

A water dividing faucet comprises a valve body and a control valve. The valve body comprises a first water outlet and a second water outlet, and the control valve controls the valve body to be opened and to be closed. The water dividing faucet further comprises the water dividing valve. The water dividing body is disposed in the second water outlet, the plug opens or closes the water inlet cavity, and the plug closes or opens the first water outlet concurrently.

Compared with the existing techniques, the technical solution of the present disclosure has the following advantages.
1. The present disclosure provides a water dividing valve and a water dividing faucet, the water dividing valve and the water dividing faucet comprises components, by way of example, a water dividing body, an operation member, a movable rod, and a transmission member, etc. A circumferential movement of the operation member is converted into a circumferential movement and an axial movement of the movable rod by the transmission member, so that the plug of the movable member closes or opens the water inlet cavity to achieve water dividing. The water dividing valve comprises few components, and an operation is easy.
2. The present disclosure provides the water dividing valve and the water dividing faucet, the transmission member comprises at least one ball, the movable rod comprises at least one sliding rail. By this transmission method, a friction force is close to zero to ensure a product comprising a longer life and being reliable.
3. The present disclosure provides the water dividing valve and the water dividing faucet, the water dividing body comprises one or more guiding holes to drive the at least one ball to rotate along a circumference of the water dividing body to ensure the at least one ball to rotate smoothly, and an operation hand feeling of a user is more comfortable.
4. The at least one sliding rail of the present invention extends in an axial direction (helically or radially), the at least one sliding rail comprises a straight line, an arc line, or a curve line, the at least one sliding rail can be set according to needs and is more flexible.
5. The present invention provides the water dividing valve and the water dividing faucet, a first end of the movable rod comprises a rod body, and a second end of the movable rid comprises a water passage, a first end of the rod body comprises a plug, and the plug comprises a sealing pad. This structure ensures the water passage can be smoothly switched to be open and to be closed.
6. The present disclosure provides the water dividing valve and the water dividing faucet, a guiding structure is disposed between the rod body and an inner wall of the water inlet cavity to drive the movable rod to move along its axial direction, so that a switching operation will be smoothly carried out
7. The present disclosure provides the water dividing valve and the water dividing faucet, an inner side of the water inlet cavity comprises a diameter variation portion, and the movable rod comprises a step portion correspondingly. The step portion abuts the diameter variation portion to limit a movement of the movable rod.

### BRIEF DESCRIPTION OF THE DRAWING

Fig. 1 illustrates a schematic view of a water dividing valve of Embodiment 1 of the present disclosure;
Fig. 2 illustrates an exploded view of Fig. 1;
Fig. 3 illustrates a sectional view of the water dividing valve;
Fig. 4 illustrates a perspective view of a touch member;
Fig. 5 illustrates a perspective view of a movable rod;
Fig. 6 illustrates a perspective view of a water dividing body;
Fig. 7 illustrates a perspective view of a water dividing faucet;
Fig. 8 illustrates an exploded view of the water dividing faucet;
Fig. 9 illustrates a sectional view of the water dividing faucet (a control valve is closed);
Fig. 10 illustrates a sectional view of the water dividing faucet (water flows out from a first water outlet);
Fig. 11 illustrates a sectional view of the water dividing faucet (the water flows out from a second water outlet); and
   among them:
   water dividing body 10, water inlet cavity 11, water inlet hole 12, guiding hole 13, guiding groove 14, diameter variation portion 15, operation member 20, mounting groove 21, handle 22, seal ring 231 and 232, movable rod 30, plug 31, water passage 32, sliding rail 33, rod body 34, convex strip 35, step portion 36, water inlet 37, sealing pad 38, transmission member 40, joint 41, pipe 42, ball 43, valve body 50, control valve 51, hot water inlet 52, first water outlet 53, second water outlet 54, screws 551 and 552, cold water inlet 56, and water inlet 57.

### DETAILED DESCRIPTION OF THE EMBODIMENTS

The present disclosure will be further described with the combination of the accompanying embodiments and the accompanying drawings.

### Embodiment 1

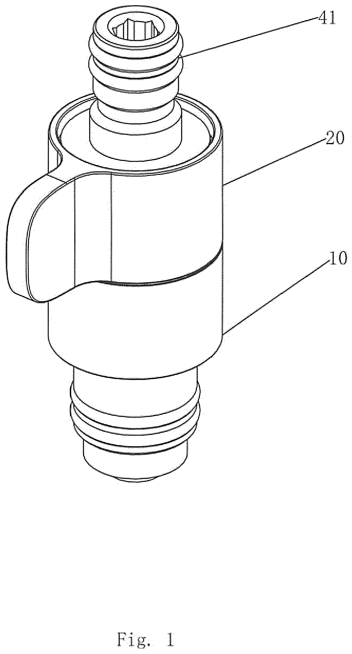

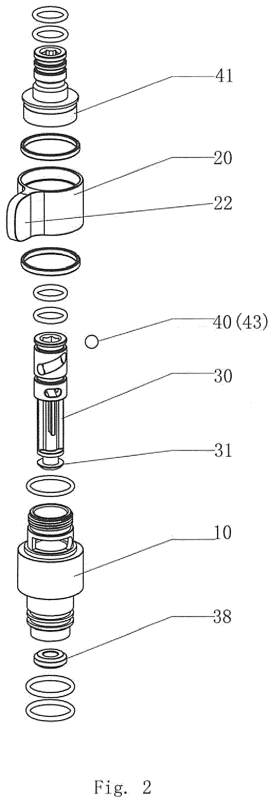

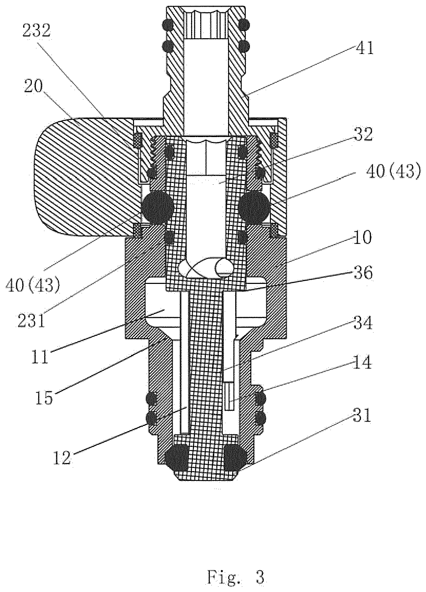

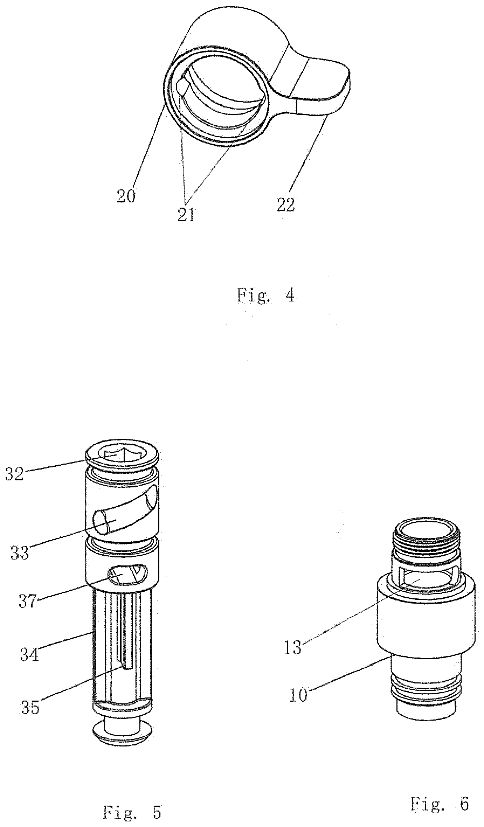

Referring to Figs. 1-6, a water dividing valve comprises a water dividing body 10, an operation member 20, a movable rod 30, and a transmission member 40, etc. The water dividing body 10 is a hollow structure and comprises a water inlet cavity 11, and the water inlet cavity 11 comprises a water inlet hole 12.

The movable rod 30 is disposed in the water inlet cavity 11, and the movable rod 30 comprises a plug 31 and a water passage 32. The water passage 32 is communicated with the water inlet cavity 11. In this embodiment, a first end of the movable rod 30 comprises a rod body 34, and a second end of the movable rod comprises the water passage 32. The rod body 34 is disposed in the water inlet cavity 11. A first end of the rod body 34 passes through the water inlet hole 12 and comprises the plug 31. The plug 31 is configured to open or close the water inlet hole 12. The water passage 32 comprises a water inlet 37, and the water inlet 37 is connected to the water inlet cavity 11. A sealing pad 38 surrounds the plug 31 to achieve sealing.

The operation member 20 surrounds an outer side of the water dividing body 10 and is configured to be driven to rotate. The transmission member 40 is disposed between the operation member 20 and the movable rod 30 to convert a circumferential movement of the operation member 20 into a circumferential movement (a circumferential movement tendency) and an axial movement (an axial movement tendency) of the movable rod 30 to enable the plug 31 to close or open the water inlet cavity 11.

In this embodiment, the operation member 20 is configured to surround a first end of the water dividing body 10 away from the plug 31. An inner side of the operation member 20 comprises one or more mounting grooves 21, and an outer side of the operation member 20 comprises a handle 22. The transmission member 40 comprises at least one ball 43, and an outer periphery of the movable rod 30 comprises at least one sliding rail 33 correspondingly. Each of the at least one ball is disposed in a corresponding one of the one or more mounting grooves 21 of the operation member 20 and slidably cooperates to a corresponding one of the at least one sliding rail 33 to convert the circumferential movement of the operation member 20 into the circumferential movement and the axial movement of the movable rod 30.

In a practical application, the water dividing body 10 comprises one or more guiding holes 13 corresponding to the at least one ball 43, and the one or more guiding holes 13 play a guiding role during a movement of the at least one ball 43. In some embodiments, the at least one ball 43 comprises two balls 43, and the at least one sliding rail 33 comprises two slide rails 33, and the two slide rails 33 are disposed along a circumferential direction of the movable rod 30.

Further, the at least one sliding rail 33 extends in an axial direction helically or radially, and the at least one sliding rail 33 comprises a straight line, an arc line, or a curve line. In this embodiment, when the outer periphery of the movable rod 30 is expanded to define a plane, and a line of each of the at least one sliding rail along a length direction is at least one of a straight line, an arc line, or a curve line. In some embodiments, the line of each of the at least one sliding rail along the length direction is the straight line or the arc line. In this embodiment, the operation member 20 can be controlled to be switched between two positions, for example, the two positions comprises a first position configured to close the water inlet cavity 11 and a second position configured to open the water inlet cavity 11, and the at least one ball 43 is configured to slide between two ends of the at least one sliding rail 33 correspondingly.

Further, the outer periphery of the rod body 34 comprises a convex strip 35, and an inner wall of the water inlet hole 12 of the water inlet cavity 11 comprises a guiding groove 14 correspondingly, the convex strip 35 is disposed in the guiding groove 14 to guide an axial movement of the rod body 34. As required, a structure can also be as follows, the outer periphery of the rod body 34 comprises a guiding groove 14, and the inner wall of the water inlet hole 12 comprises a convex strip 35.

Further, an inner side of the water inlet cavity 11 comprises a diameter variation portion 15, and the movable rod 30 comprises a step portion 36 correspondingly. The diameter variation portion 15 is disposed on an end of the water inlet hole 12 away from inflow of water, and an intersection between the rod body 34 and the water passage 32 define the step portion 36. When the movable rod 30 moves along the axial direction (e.g., the axial direction of the movable rod 30), the step portion 36 abuts the diameter variation portion 15 to achieve position limiting.

Further, this embodiment further comprises a joint 41, the joint 41 is fixedly disposed between the operation member 20 and the water dividing body 10, and the joint 41 is screwed to the water dividing body 10 to obtain a detachable connection. The joint 41 is connected to the water passage 32 and is configured to be connected to an external pipe, by way of example, a pipe 42 for shower. The pipe 42 is locked to the joint 41 by a screw 551.

This embodiment provides the water dividing valve, an outer wall of the water passage 32 of the movable rod 30 is sealed to the inner wall of the water dividing body 10 by a sealing ring 231, the water dividing body 10 is sealed to an inner wall of the joint 41 by a sealing ring 232, so that water leakage is avoided.

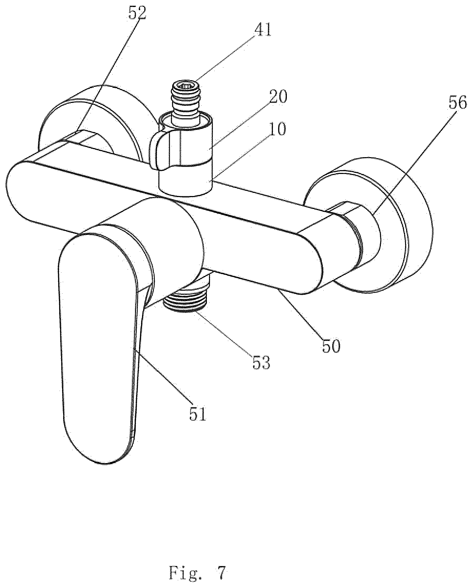

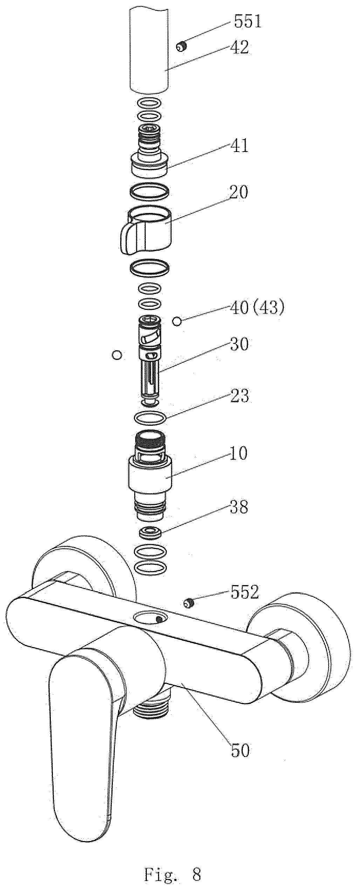

Referring to Figs. 7-9, this embodiment further discloses a water dividing faucet, the water dividing faucet comprises a valve body 50, a control valve 51, and the water dividing valve. The valve body 50 comprises conventional components, for example, one or more water inlets 57, a first water outlet 53, and a second water outlet 54. The number of the one or more water inlets 57 can be one or two, for example, a hot water inlet 52 and a cold water inlet 56 define the one or more water inlets 57. The control valve 51 is disposed in the valve body 50, and the control valve 51 can be an on-off valve, a thermostatic valve, or a water mixing valve. A water outlet of the control valve 51 is connected to the first water outlet 53 and the second water outlet 54. The first water outlet 53 and the second water outlet 54 can be coaxial.

The water dividing body 10 is disposed in the second water outlet 54, and the plug 31 is opposite to the first water outlet 53. When the plug 31 opens or closes the water inlet cavity 11, it closes or opens the first water outlet 53 concurrently. The water dividing body 10 can be locked to the second water outlet by a screw 552, and an outer periphery of the water dividing body 10 is sealed to an inner wall of the second water outlet 54 by a seal ring.

This embodiment provides the water dividing faucet, by way of example, the water dividing faucet comprises the hot water inlet 52 and the cold water inlet 56, and its working principle is as follows.

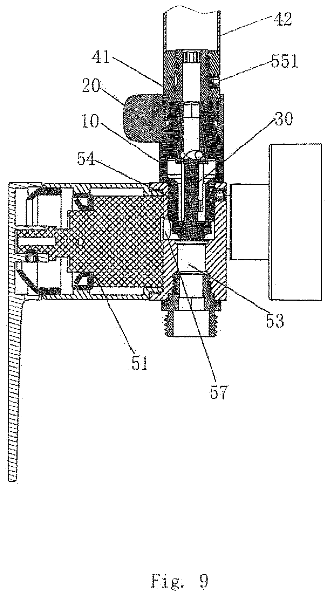

Referring to Fig. 9, in a default setting, the control valve 51 is in a closed state and does not discharge water. The plug 31 of the movable rod 30 closes the water inlet cavity 11. The at least one ball 43 is at a first end of the at least one sliding rail 33. Water does not flow out from the first water outlet 53 and the second water outlet 54.

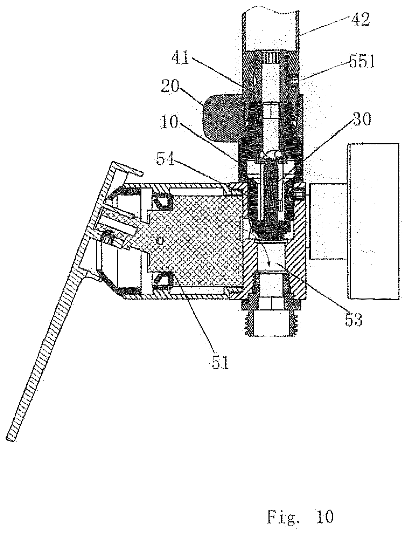

Referring to Fig. 10, when the control valve 51 is opened, the water flows out from the hot water inlet 52 and the cold water inlet 56 into the control valve 51 to be mixed to obtain a mixed water, and the mixed water flows out from the water outlet of the control valve 51, as the water inlet cavity 11 of the water dividing body 10 is closed, the second water outlet 54 does not discharge water, and the mixed water flows out from the first water outlet 53.

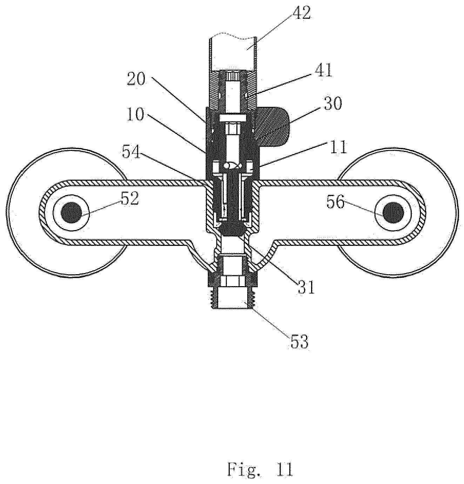

Referring to Fig. 11, when the operating handle 22 is rotated to the second position, the operation member 20 drives the at least one ball 43 to rotate. During a rotation (e.g., a rotation of the operating handle 22), the movable rod 30 rotates (e.g., a circumferential direction of the movable rod 30) and moves in an axial direction (e.g., an axial direction of the movable rod 30) concurrently, the at least one ball 43 slides to the second end of at least one the sliding rail 33, the plug 31 opens the water inlet cavity 11 and closes the first water outlet 53, the mixed water flows out from the water inlet cavity 11, the water passage 32, the joint 41, and the second water outlet 54.

It will be apparent to those skilled in the art that various modifications and variation can be made in the present disclosure without departing from the scope of the disclosure as defined by the appended claims. Thus, it is intended that the present disclosure cover the modifications and variations of this disclosure provided they come within the scope of the appended claims.

## Claims

1. A water dividing valve, comprising
a water dividing body (10) and
an operation member (20),
wherein the water dividing body (10) comprises a water inlet cavity (11),
wherein the water dividing valve further comprises a movable rod (30) and a transmission member (40),
the movable rod (30) is disposed in the water inlet cavity (11),
the movable rod (30) comprises a plug (31) and a water passage (32),
the water passage (32) is communicated with the water inlet cavity (11),
the operation member (20) surrounds an outer side of the water dividing body (10) and is configured to be driven to rotate,
the transmission member (40) is disposed between the operation member (20) and the movable rod (30) to convert a circumferential movement of the operation member (20) to a circumferential movement and an axial movement of the movable rod (30) or to convert a circumferential movement of the operation member (20) to an axial movement of the movable rod (30) to enable the plug (31) to close or open the water inlet cavity (11),
**characterized in that** an outer periphery of the movable rod (30) comprises at least one sliding rail (33),
the transmission member (40) comprises at least one ball (43), and
each of the at least one ball (43) is disposed in an inner wall of the operation member (20) and slidably cooperates to a corresponding one of the at least one slide rail (33).

2. The water dividing valve according to claim 1, **characterized in that**
the water dividing body (10) comprises one or more guiding holes (13), and
the at least one ball (43) is disposed in the one or more guiding holes (13).

3. The water dividing valve according to claim 1, **characterized in that**
the water dividing valve comprises two balls (43) of the at least one ball (43) and two slide rails (33) of the at least one slide rail (33), and
the two slide rails (33) are disposed along a circumferential direction of the movable rod (30).

4. The water dividing valve according to claim 1, **characterized in that**
the at least one sliding rail (33) extends in an axial direction helically or radially, and
the at least one sliding rail (33) comprises at least one of a straight line, an arc line or a curve line.

5. The water dividing valve according to claim 1, **characterized in that**
a first end of the movable rod (30) comprises a rod body (34),
a second end of the movable rod (30) comprises the water passage (32),
a first end of the rod body (34) is disposed in the water inlet cavity (11) and comprises the plug (31),
the water passage (32) comprises a water inlet (57), and
the water inlet (57) is connected to the water inlet cavity (11).

6. The water dividing valve according to claim 5, **characterized in that**
the rod body (34) comprises a convex strip (35),
an inner wall of the water inlet cavity (11) comprises a guiding groove (14), and
the convex strip (35) is disposed in the guiding groove (14).

7. The water dividing valve according to claim 1, **characterized in that**
the water inlet cavity (11) comprises a diameter variation portion (15), and
the movable rod (30) comprises a step portion (36) correspondingly.

8. The water dividing valve according to claim 1, **characterized in that**
the water dividing valve further comprising a joint (41),
the joint (41) is fixedly disposed between the operation member (20) and the water dividing body (10), and
the joint (41) is connected to the water passage (32).

9. A water dividing faucet, comprising
a valve body (50), and
a control valve (51), the valve body (50) comprises a first water outlet (53) and a second water outlet (54),
the control valve (51) controls the valve body (50) to be opened and to be closed, **characterized in that**
the water dividing faucet further comprises the water dividing valve according to any one of claims 1 to 8,
the water dividing body is disposed in the second water outlet (54),
the plug (31) opens or closes the water inlet cavity (11), and
the plug (31) closes or opens the first water outlet (53) concurrently.

## Patentansprüche

1. Ein Wasserteilerventil, bestehend aus
einem Wasserteilungskörper (10) und
einem Betätigungselement (20),
wobei der Wasseraufteilungskörper (10) einen Wassereinlasshohlraum (11) aufweist,
wobei das Wasserteilerventil ferner eine bewegliche Stange (30) und ein Übertragungselement (40) umfasst,
die bewegliche Stange (30) in dem Wassereinlasshohlraum (11) angeordnet ist,
die bewegliche Stange (30) einen Stopfen (31) und einen Wasserdurchlass (32) aufweist,
der Wasserdurchgang (32) mit dem Wassereinlasshohlraum (11) in Verbindung steht,
das Betätigungselement (20) eine Außenseite des Wasseraufteilungskörpers (10) umgibt und so konfiguriert ist, dass es zu einer Drehung angetrieben wird, das Übertragungselement (40) zwischen dem Betätigungselement (20)
und der beweglichen Stange (30) angeordnet ist, um eine Umfangsbewegung des Betätigungselements (20) in eine Umfangsbewegung und eine axiale Bewegung der beweglichen Stange (30) umzuwandeln oder eine Umfangsbewegung des Betätigungselements (20) in eine Axialbewegung der beweglichen Stange (30) umzuwandeln, damit der Stopfen (31) den Wassereinlasshohlraum (11) schließen oder öffnen kann,
**dadurch gekennzeichnet, dass** ein Außenumfang der beweglichen Stange (30) mindestens eine Gleitschiene (33) aufweist,
das Übertragungselement (40) mindestens eine Kugel (43) umfasst, und jede der mindestens einen Kugel (43) in einer Innenwand des Betätigungselements (20) angeordnet ist und gleitend mit einer entsprechenden der mindestens einen Gleitschiene (33) zusammenwirkt.

2. Wasserteilerventil nach Anspruch 1, **dadurch gekennzeichnet, dass**
der Wasserteilungskörper (10) ein oder mehrere Führungslöcher (13) aufweist, und die mindestens eine Kugel (43) in dem einen oder den mehreren Führungslöchern (13) angeordnet ist.

3. Wasserteilerventil nach Anspruch 1, **dadurch gekennzeichnet, dass**
das Wasserteilerventil zwei Kugeln (43) der mindestens einen Kugel (43) und zwei Gleitschienen (33) der mindestens einen Gleitschiene (33) umfasst, und die beiden Gleitschienen (33) entlang einer Umfangsrichtung der beweglichen Stange (30) angeordnet sind.

4. Wasserteilerventil nach Anspruch 1, **dadurch gekennzeichnet, dass**
die mindestens eine Gleitschiene (33) sich in einer axialen Richtung schraubenförmig oder radial erstreckt, und
die mindestens eine Gleitschiene (33) mindestens eine gerade Linie, eine Bogenlinie oder eine Kurvenlinie aufweist.

5. Wasserteilerventil nach Anspruch 1, **dadurch gekennzeichnet, dass**
ein erstes Ende der beweglichen Stange (30) einen Stangenkörper (34) aufweist,
ein zweites Ende der beweglichen Stange (30) den Wasserdurchlass (32) umfasst,
ein erstes Ende des Stangenkörpers (34) in dem Wassereinlasshohlraum (11) angeordnet ist und den Stopfen (31) aufweist,
der Wasserdurchgang (32) einen Wassereinlass (57) umfasst, und
der Wassereinlass (57) mit dem Wassereinlasshohlraum (11) verbunden ist.

6. Wasserteilerventil nach Anspruch 5, **dadurch gekennzeichnet, dass**
der Stangenkörper (34) einen konvexen Streifen (35) aufweist,
eine Innenwand des Wassereinlasshohlraums (11) eine Führungsrille (14) aufweist, und
der konvexe Streifen (35) in der Führungsnut (14) angeordnet ist.

7. Wasserteilerventil nach Anspruch 1, **dadurch gekennzeichnet, dass**
der Wassereinlasshohlraum (11) einen Abschnitt (15) zur Veränderung des Durchmessers umfasst, und die bewegliche Stange (30) einen entsprechenden Stufenabschnitt (36) aufweist.

8. Wasserteilerventil nach Anspruch 1, **dadurch gekennzeichnet, dass**
das Wasserteilerventil ferner einen Anschluss (41) umfasst,
der Anschluss (41) fest zwischen dem Betätigungselement (20) und dem Wasserteilungskörper (10) angeordnet ist, und
der Anschluss (41) mit dem Wasserdurchlass (32) verbunden ist.

9. Wasserteilende Armatur, umfassend einen Ventilkörper (50), und
ein Steuerventil (51), wobei der Ventilkörper (50) einen ersten Wasserauslass (53) und einen zweiten Wasserauslass (54), das Steuerventil (51) das Öffnen und Schließen des Ventilkörpers (50) steuert, **dadurch gekennzeichnet, dass** die wasserteilende Armatur ferner das Wasserteilventil nach einem der Ansprüche 1 bis 8 umfasst, der Wasserteilungskörper im zweiten Wasserauslass (54) angeordnet ist, der Stopfen (31) den Wassereinlasshohlraum (11) öffnet oder verschließt, und der Stopfen (31) gleichzeitig den ersten Wasserauslass (53) verschließt oder öffnet.

## Revendications

1. Soupape de division d'eau, comprenant
un corps de division d'eau (10) et
un élément opérationnel (20),
le corps de division d'eau (10) comprenant une cavité d'entrée d'eau (11),
la soupape de division d'eau comprenant en outre une tige (30) et un élément de transmission (40),
la tige mobile (30) étant disposée dans la cavité d'entrée d'eau (11),
la tige mobile (30) comprenant un bouchon (31) et un passage d'eau (32),
le passage d'eau (32) étant en communication avec la cavité d'entrée d'eau (11),
l'élément opérationnel (20) entourant un côté extérieur du corps de division d'eau (10) et étant conçu pour être entraîné en rotation, l'élément de transmission (40) étant disposé entre l'élément opérationnel (20) et la tige mobile (30) pour convertir un mouvement circonférentiel de l'élément opérationnel (20) en un mouvement circonférentiel et un mouvement axial de la tige mobile (30) ou pour convertir un mouvement circonférentiel de l'élément opérationnel (20) en un mouvement axial de la tige mobile (30) pour permettre au bouchon (31) de fermer ou d'ouvrir la cavité d'entrée d'eau (11), **caractérisée en ce qu'**une périphérie extérieure de la tige mobile (30) comprend au moins une glissière (33),
l'élément de transmission (40) comprend au moins une bille (43), et chacune de l'au moins une bille (43) est disposée dans une paroi intérieure de l'élément opérationnel (20) et coopère de manière coulissante avec une correspondante de l'au moins une glissière (33).

2. Soupape de division d'eau selon la revendication 1, **caractérisée en ce que**
le corps de division d'eau (10) comprend un ou plusieurs trous de guidage (13), et
l'au moins une bille (43) est disposée dans le ou les trous de guidage (13).

3. Soupape de division d'eau selon la revendication 1, **caractérisée en ce que**
la soupape de division d'eau comprend deux billes (43) de l'au moins une bille (43) et deux glissières (33) de l'au moins une glissière (33), et
les deux glissières (33) sont disposées le long d'une direction circonférentielle de la tige mobile (30).

4. Soupape de division d'eau selon la revendication 1, **caractérisée en ce que**
l'au moins une glissière (33) s'étend dans une direction axiale de manière hélicoïdale ou radiale, et
l'au moins une glissière (33) comprend au moins l'une parmi une ligne droite, une ligne en arc ou une ligne courbe.

5. Soupape de division d'eau selon la revendication 1, **caractérisée en ce que**
une première extrémité de la tige mobile (30) comprend un corps de tige (34),
une seconde extrémité de la tige mobile (30) comprend le passage d'eau (32),
une première extrémité du corps de tige (34) est disposée dans la cavité d'entrée d'eau (11) et comprend le bouchon (31),
le passage d'eau (32) comprend une entrée d'eau (57), et
l'entrée d'eau (57) est raccordée à la cavité d'entrée d'eau (11).

6. Soupape de division d'eau selon la revendication 5, **caractérisée en ce que**
le corps de tige (34) comprend une bande convexe (35),
une paroi intérieure de la cavité d'entrée d'eau (11) comprend une rainure de guidage (14), et
la bande convexe (35) est disposée dans la rainure de guidage (14).

7. Soupape de division d'eau selon la revendication 1, **caractérisée en ce que**
la cavité d'entrée d'eau (11) comprend une partie de variation de diamètre (15), et
la tige mobile (30) comprend une partie échelon (36) correspondante.

8. Soupape de division d'eau selon la revendication 1, **caractérisée en ce que**
la soupape de division d'eau comprend en outre un joint (41),
le joint (41) est disposé de manière fixe entre l'élément opérationnel (20) et le corps de division d'eau (10), et
le joint (41) est raccordé au passage d'eau (32).

9. Robinet de division d'eau, comprenant
un corps de soupape (50), et
une soupape de commande (51), le corps de soupape (50) comprenant une première sortie d'eau (53) et une seconde sortie d'eau (54),
la soupape de commande (51) commandant l'ouverture et la fermeture du corps de soupape (50),
**caractérisée en ce que**
le robinet de division d'eau comprend en outre la soupape de division d'eau selon l'une quelconque des revendications 1 à 8,
le corps de division d'eau est disposé dans la seconde sortie d'eau (54),
le bouchon (31) ouvre ou ferme la cavité d'entrée d'eau (11), et
le bouchon (31) ferme ou ouvre simultanément la première sortie d'eau (53).
